(19) Europäisches Patentamt
European Patent Office
Office européen des brevets

(11) **EP 1 747 435 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(21) Anmeldenummer: **05747186.4**

(22) Anmeldetag: **13.05.2005**

(51) Int Cl.:
*G01J 5/60* (2006.01)     *F24C 7/08* (2006.01)
*F24C 15/10* (2006.01)

(86) Internationale Anmeldenummer:
**PCT/EP2005/052199**

(87) Internationale Veröffentlichungsnummer:
**WO 2005/111561 (24.11.2005 Gazette 2005/47)**

(54) **TEMPERATURSENSOR FÜR EIN GARGERÄT, GARGERÄT MIT ELEKTRONISCHER TEMPERATURREGELUNG UND VERFAHREN ZUR TEMPERATURERFASSUNG**

TEMPERATURE SENSOR FOR A COOKING DEVICE, COOKING DEVICE WITH ELECTRONIC TEMPERATURE CONTROL AND METHOD FOR TEMPERATURE RECORDING

CAPTEUR DE TEMPERATURE POUR UN APPAREIL DE CUISSON, APPAREIL DE CUISSON A REGULATION ELECTRONIQUE DE LA TEMPERATURE ET PROCEDE POUR DETECTER UNE TEMPERATURE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **13.05.2004 DE 102004023846**

(43) Veröffentlichungstag der Anmeldung:
**31.01.2007 Patentblatt 2007/05**

(73) Patentinhaber: **BSH Hausgeräte GmbH**
**81739 München (DE)**

(72) Erfinder:
• **HAS, Uwe**
**84579 Unterneukirchen-Oberschroffen (DE)**
• **VETTERL, Peter**
**83355 Grabenstätt (DE)**

(56) Entgegenhaltungen:
| EP-A- 0 462 901 | EP-A- 0 592 361 |
| WO-A-94/10545 | DE-A1- 3 036 638 |
| DE-A1- 3 044 735 | DE-A1- 10 329 205 |
| DE-C1- 4 342 489 | US-A1- 2004 089 808 |

**EP 1 747 435 B1**

## Beschreibung

Die vorliegende Erfindung betrifft einen Temperatursensor für ein Gargerät gemäß Oberbegriff des Anspruchs 1, der zur berührungslosen Erfassung einer Temperatur eines Kochgeschirrs dient. Die Erfindung betrifft zudem ein Gargerät mit den Merkmalen des Anspruchs 2 sowie ein Verfahren zur berührungslosen Erfassung einer Temperatur eines Kochgeschirrs mit den Merkmalen des Anspruchs 3.

Einfacher ausgestattete Gargeräte weisen keine Schaltungen zur Regelung einer Gartemperatur auf. Die Gartemperatur kann lediglich grob mittels Stelleinrichtungen vorgewählt werden. Während des Garverlaufs schwankt dann die Temperatur an der Kochstelle mehr oder weniger stark. Bei besser ausgestatteten Gargeräten kann eine Regelungsschaltung vorgesehen sein, die zur Konstanthaltung einer vorgewählten Temperatur dient. Eine notwendige Eingangsgröße stellt eine gemessene Temperatur am Kochfeld und/oder am Kochgeschirr dar.

Bekannte, berührungslos arbeitende Temperatursensoren dienen bei Gargeräten zur Erfassung der Temperaturen der auf den Kochfeldern befindlichen Kochgeschirre. Bekannte Temperatursensoren umfassen einen Infrarotsensor, der mittels eines Gleichlichtpyrometers die Temperatur der Außenwand des Kochgeschirrs in einem Wellenlängenbereich von ca. 6 $\mu$m bis ca. 14 $\mu$m erfasst. Das vom Infrarotsensor für die elektronische Regelung bereit gestellte elektrische Signal hängt unmittelbar vom Emissionsgrad der betrachteten Topfseite ab. Damit ein möglichst zuverlässiges und störungsfreies Signal erreicht wird, muss dieser Emissionsgrad im betrachteten Wellenlängenbereich möglichst exakt bekannt sein. Dieser betrachtete Wellenlängenbereich wird auch als Bandemissionsgrad bezeichnet.

Allerdings differieren die Emissionsgrade unterschiedlicher Kochgeschirre aufgrund der teilweise unterschiedlichen Materialien. Der Emissionsgrad von Edelstahltöpfen unterscheidet sich stark von dem Emissionsgrad emaillierter Töpfe. Bereits der Einsatz von Töpfen mit ungeeigneter Emailbeschichtung führt zu einer Verschiebung der erreichten Lebensmitteltemperaturen im Topf. Ursache hierfür sind Schwankungen des Bandemissionsgrades der Emailbeschichtung. Bereits Verschmutzungen auf der Beschichtung können Probleme bei der exakten Temperaturbestimmung bereiten.

Ein Verfahren zur berührungslosen, vom Emissionsgrad des betrachteten Objekts unabhängigen Strahlungsmessung der Objekttemperatur ist aus der EP 0 143 282 A bekannt. Ein Verfahren zur Erfassung einer Temperaturverteilung eines Kochgeschirrs ist weiterhin aus der EP 1 302 759 A bekannt.

Aus der EP 0 462 901 A1 ist ein Verfahren zur Temperaturerfassung mittels eines Zweikanalpyrometers bekannt.

Eine Aufgabe der vorliegenden Erfindung besteht darin, einen berührungslos arbeitenden Sensor zur Erfassung einer Kochgeschirrtemperatur zur Verfügung zu stellen, der ein möglichst zuverlässiges Temperatursignal liefert.

Diese Aufgabe wird durch die Merkmale des Anspruchs 1 und respektive Anspruchs 3 gelöst.

Dabei erfasst ein Infrarotsensor in einem definierten Wellenlängenbereich $\lambda$ (mit $\lambda_1 \leq \lambda \leq \lambda_2$) die vom betrachteten Objekt ausgehende Wärmestrahlung und wandelt diese in ein elektrisches Signal um. Das vom Infrarotsensor gelieferte elektrische Signal $S_{12}(T)$ bezeichnet eindeutig die Temperatur der betrachteten Oberfläche. Der Bandemissionsgrad $\varepsilon_{12}$ der betrachteten Oberfläche ist in dem erfassten Signal $S_{12}(T)$ als multiplikativer Faktor enthalten. Das Signal $S_{12}(T)$ kann entsprechend folgender Gleichung (1) hergeleitet werden

$$S_{12}(T) \; = \; S_{P,\,12}(T) \; * \; \varepsilon_{12} \; * \; C_{12} \, ,$$

wobei der Term $S_{P,\,12}(T)$ das theoretische Signal eines Planck'schen Strahlers im betrachteten Wellenlängenbereich ($\lambda_1 \leq \lambda \leq \lambda_2$) bezeichnet. Der Faktor $C_{12}$ bezeichnet eine Korrekturgröße aus der Optik des Sensors bzw. aus der Größe der betrachteten Fläche für diese Messung.

Unter der Voraussetzung, dass in zwei getrennten Wellenlängenbereichen $\lambda_1 \leq \lambda \leq \lambda_2$ und $\lambda_3 \leq \lambda \leq \lambda_4$ (mit $\lambda_2 < \lambda_3$) die beiden jeweiligen Bandemissionsgrade $\varepsilon_{12}$ und $\varepsilon_{34}$ ungefähr gleich groß sind, kann aus der obigen Gleichung (1) aus den Ausgangssignalen ein Verhältnis der beiden Signale $S_{12}(T)$ und $S_{34}(T)$ entsprechend folgender Gleichung (2) gebildet werden.

$$S_{12/34}(T) \quad = \; (S_{P,\,12}(T) \; * \; \varepsilon_{12} \; * \; C_{12}) \, / \, (S_{P,\,34}(T) \; * \; \varepsilon_{34} \; * \; C_{34})$$
$$= \; (S_{P,\,12}(T) \; * \; C_{12}) \, / \, (S_{P,\,34}(T) \; * \; C_{34}).$$

Hieraus lässt sich auf relativ zuverlässige Weise eine tatsächliche Temperatur der betrachteten Objektfläche ermitteln, auch wenn die Bandemissionsgrade unterschiedlich groß sind. Da zudem die beiden Faktoren, welche von den jeweils benutzten Optiken und den Größen der betrachteten Flächen abhängen, bekannt sind, reduziert sich die Gleichung (2) zur folgenden Gleichung (3):

$$S_{12/34}(T) \; = \; S_{P,\,12}(T) \; / \; S_{P,\,34}(T) \; * \; C_{Optik}$$

In dieser Gleichung (3) ist der Faktor $C_{Optik}$ nur noch als allgemeiner Faktor enthalten, welcher die speziellen Eigenheiten der beiden Pyrometerkanäle beschreibt. Der errechnete Wert $S_{12/34}(T)$ ist ein relativ zuverlässiges Maß für die Temperatur der betrachteten Fläche. Die Erfindung ermöglicht somit eine materialunabhängige Erfassung der Kochtemperaturen. Hierbei gibt es keine Probleme mit schwankenden Emailqualitäten oder mit unterschiedlichen Materialen der verwendeten Kochgeschirre, da die verwendete Infrarotkochsensorik unabhängig von der Art des eingesetzten Kochgeschirrs ist.

Wenn die beiden Bandemissionsgrade $\varepsilon_{12}$ und $\varepsilon_{34}$ nicht gleich sind, dann kann mit der folgenden Gleichung (4)

$$C_{\varepsilon} \; = \; \varepsilon_{12} \; / \; \varepsilon_{34}$$

ein Faktor $C_{\varepsilon}$ aus einem Verhältnis der beiden Bandemissionsgrade bestimmt werden. Entsprechend obiger Gleichung (3) kann damit das Signalverhältnis $S_{12/34}(T)$ trotzdem bestimmt werden, und zwar entsprechend folgender Gleichung (5):

$$S_{12/34}(T) \; = \; S_{P,\,12}(T) \; / \; S_{P,\,34}(T) \; * \; C_{Optik} \; * \; C_{\varepsilon}$$

Falls die mit diesen Gleichungen erreichte Genauigkeit nicht ausreichen sollte, können wahlweise auch mehr als zwei Wellenlängenbereiche betrachtet werden. Durch Betrachtung von mindestens drei getrennten Wellenlängenbereichen $\lambda_1 \leq \lambda \leq \lambda_2$ , $\lambda_3 \leq \lambda \leq \lambda_4$ und $\lambda_5 \leq \lambda \leq \lambda_6$ (mit $\lambda_2 < \lambda_3$ und $\lambda_4 < \lambda_5$) kann die Messgenauigkeit erhöht und zudem die Zulässigkeit einer Rechung nach Gleichung (3) überprüft werden. Ggf. ist es sogar möglich, das Verhältnis der betrachteten Bandemissionsgrade abzuschätzen. Die Güte einer solchen Abschätzung kann im betrachteten Anwendungsfall sehr genaue Werte für die zu erfassenden Temperaturen liefern, da die Anzahl der eingesetzten unterschiedlichen Kochgeschirre nicht unbegrenzt ist. In der Regel wird die Kochsensorik nur mit einer sehr begrenzten Anzahl unterschiedlicher Materialien von Kochgeschirren konfrontiert.

Für eine relativ präzise Temperaturregelung ist es erfindungsgemäss vorgesehen, dass sich die einzelnen Wellenlängenbereiche nicht überschneiden, sondern voneinander beabstandet sind. Dabei ist es für eine zuverlässige Aussage über die Temperatur entscheidend, dass die den Wellenlängenbereichen zugeordneten Energiemengen im wesentlichen gleichgroß sind.

Für eine besonders genaue Berechnung der Temperatur ist vorgesehen, dass die Wellenlängenbereiche eine Breite von zumindest 5 bis 2 $\mu$m, insbesondere eine Breite von 10 $\mu$m bis 20 $\mu$m aufweisen. In der Praxis hat sich gezeigt, dass eine Beschränkung der erfassten Wellenlängenbereiche auf 15 $\mu$m bis 20 $\mu$m ausreicht, um eine relative präzise Temperaturregelung zu ermöglichen. Hierbei ist es für eine möglichst fehlerfreie Temperaturermittlung besonders vorteilhaft, wenn einerseits die einzelnen Wellenlängenbereiche von möglichst gleicher Breite sind und gleichzeitig aneinander stoßen.

Die Erfindung betrifft weiterhin ein Gargerät mit wenigstens einer Kochstelle, die eine elektronische Temperaturregelung aufweist, deren wenigstens eine Regelgröße mittels eines Temperatursensors gemäß einer der zuvor beschriebenen Ausführungsformen ermittelbar ist. Die sinnvollen Wellenlängenbereiche für das Mehrkanalpyrometer des Temperatursensors können zwischen 4 und 20 $\mu$m liegen. Vorzugsweise weist der Kochsensor ein Mehrkanalpyrometer mit mindestens drei Messwellenlängenbereichen auf. Gegebenenfalls können auch mehr Kanäle vorgesehen sein.

Die Erfindung betrifft schließlich ein Verfahren zur berührungslosen Erfassung einer Temperatur eines Kochgeschirrs, bei dem mittels eines Infrarotsensors wenigstens zwei unterschiedliche, vom Kochgeschirr emittierte, Wellenlängenbereiche erfasst werden.

Der Vorteil der erfindungsgemäßen Sensorik liegt darin, dass keine Probleme mit schwankenden Emailqualitäten, mit unterschiedlichen Materialien, mit unterschiedlichen Vorschäden an den Kochgeschirren, etc. mehr auftreten. Die Kochsensorik ist relativ unabhängig von der Art des eingesetzten Kochgeschirrs.

Weiter Ausgestaltungen und Vorteile der Erfindung lassen sich den abhängigen Ansprüchen entnehmen.

Die Erfindung wird nachfolgend anhand eines bevorzugten Ausführungsbeispiels unter Bezugnahme auf die beiliegenden Zeichnungen näher erläutert. Dabei zeigt:

Figur 1    eine schematische Darstellung einer Kochstelle mit einem erfindungsgemäßen Temperatursensor,

Figur 2    in einem Diagramm einen Zusammenhang zwischen einer Temperatur eines Kochgeschirrs und einer von diesem emittierten Strahlungsenergie und

Figur 3     in einem weiteren Diagramm unterschiedliche Signalhubverläufe eines Schwarzen Strahlers bei unterschiedlichen Temperaturen bzw. Wellenlängenbereichen.

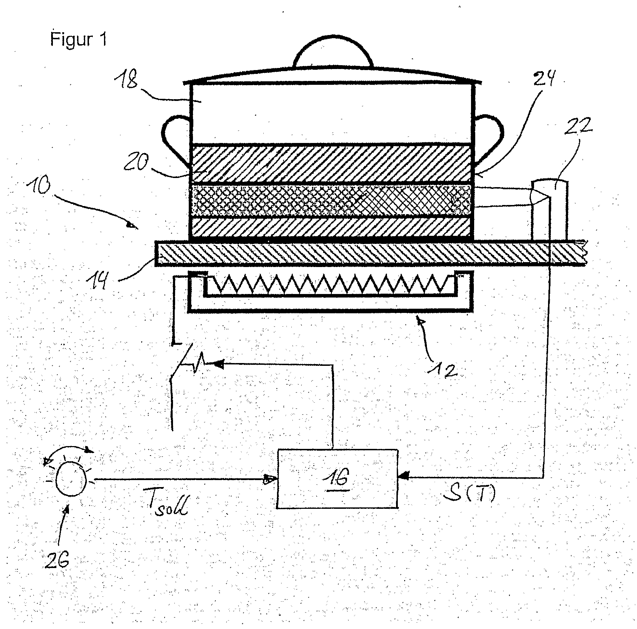

Figur 1 verdeutlicht eine Kochstelle 10 eines Gargeräts, die eine Heizeinrichtung 12 unterhalb einer Glaskeramikplatte 14 umfasst. Die Heizleistung der elektrischen Heizeinrichtung 12 ist über eine elektronische Regelschaltung 16 einstellbar. Auf der Kochstelle 10 befindet sich ein Kochgeschirr 18 mit darin befindlichem Gargut 20. Um eine möglichst exakte Temperatur des Garguts 20 im Kochgeschirr 18 erfassen zu können, ist ein Infrarotsensor 22 vorgesehen, der eine Temperatur an einer Außenwand 24 des Kochgeschirrs 18 berührungslos erfasst.

In der Regelschaltung 16 werden zumindest zwei Eingangsgrößen verarbeitet. Dies sind zum einen eine vom Benutzer mittels einer Eingabeeinrichtung 26 vorgewählte Kochtemperatur, $T_{soll}$. Zum anderen erfasst die Regelschaltung ein vom Infrarotsensor 22 geliefertes Messsignal. Der Infrarotsensor 22 weist vorzugsweise ein Mehrkanalpyrometer auf, dessen elektrische Ausgangssignale S(T) in der Regelschaltung 16 ausgewertet werden und woraus eine Kompensation errechnet wird, so dass die Temperaturen des Garguts 20 auch bei unterschiedlichen Materialien des Kochgeschirrs 18 zuverlässig bestimmt werden können.

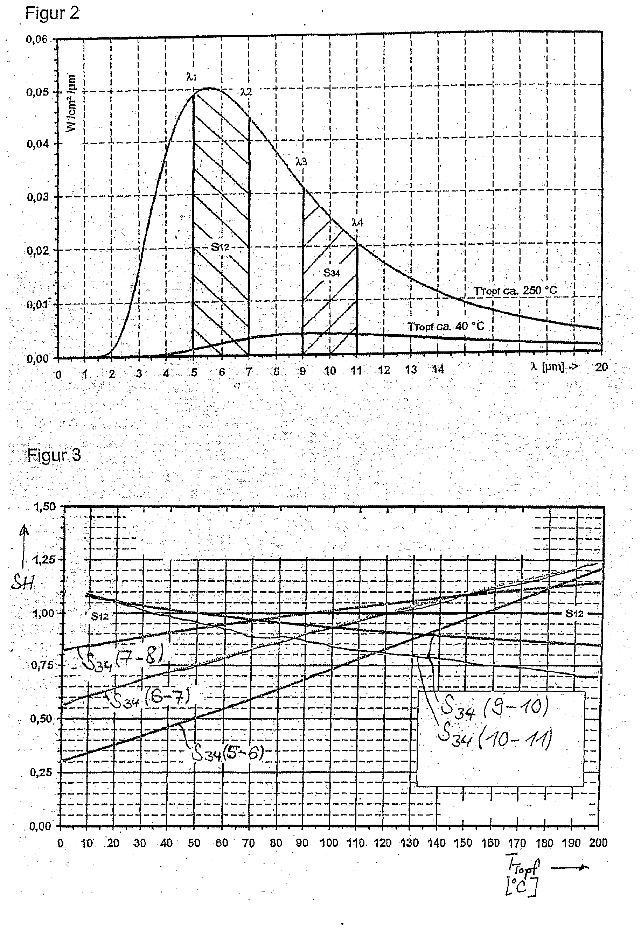

Das Diagramm der Figur 2 verdeutlicht einen qualitativen Zusammenhang zwischen den Ausgangssignalen des Sensors bei unterschiedlichen Wellenlängenbereichen sowie bei unterschiedlichen Temperaturen des Kochgeschirrs am Beispiel eines sog. Schwarzen Strahlers. Dargestellt sind die Zusammenhänge zwischen einer vom Kochgeschirr emittierten Wärmeenergie bei unterschiedlichen Wellenlängen. Auf der Abszisse ist eine Wellenlänge $\lambda$ im Bereich zwischen 0 und 20 $\mu$m aufgetragen. Auf der Ordinate ist die vom Kochgeschirr abgestrahlte Energie (in W / cm$^2$ / $\mu$m) des Schwarzen Strahlers aufgetragen.

Es ist deutlich erkennbar, dass bei einer Temperatur des Kochgeschirrs von ca. 40 °C ($T_{Topf} \approx$ 40 °C) keine verwertbaren Aussagen über die bei unterschiedlichen Wellenlängen abgestrahlte Wärmeenergie gemacht werden können. Bei einer erhöhten Temperatur des Kochgeschirrs von ca. 250 °C ($T_{Topf} \approx$ 250 °C) tritt jedoch ein spezifisches Energiemaximum im betrachteten Wellenlängenbereich zwischen 5 $\mu$m ($\lambda_1$) und 7 $\mu$m ($\lambda_2$) auf, woraus ein Signal $S_{12}$ gewonnen werden kann. Ebenso kann ein verwertbares Signal $S_{34}$ im betrachteten weiteren Wellenlängenbereich zwischen 9 $\mu$m ($\lambda_3$) und 11 $\mu$m ($\lambda_4$) gewonnen werden, woraus mit Hilfe der oben dargestellten Gleichungen (1) bis (5) mit relativ guter Genauigkeit einer wahrscheinliche Temperatur des Kochgeschirrs hergeleitet werden kann.

Die Temperaturerfassung der im Kochgeschirr zu garenden Speisen beruht auf zuvor gemessenen spezifischen Signalverläufen für unterschiedliche Materialen, Beschichtungen, Reflexionsgraden und Wandstärken von typischerweise in der Praxis verwendeten Kochgeschirren. Aus den spezifischen Signalverläufen kann mit guter Wahrscheinlichkeit auf das verwendete Kochgeschirr geschlossen werden, wonach sich dessen Temperaturen aus Zuordnungsvorschriften, die in der Regelschaltung abgelegt sind, herleiten lassen.

Das Diagramm der Figur 3 verdeutlicht eine Reihe von geschätzten Signalhubverläufen bei Betrachtung eines Schwarzen Strahlers. Diese Verläufe lassen sich durch überschlägige Rechnungen bestätigen. Hierbei wird deutlich, dass bei Infrarotmessungen in einem Temperaturbereich von ca. 40 °C bis ca. 200 °C (innerhalb eines Wellenlängenbereichs von ca. 5 $\mu$m bis ca. 16 $\mu$m) mit einem Signalhub in der Größenordnung von etwa 3 bis 5 gerechnet werden kann. Während auf der Abszisse des Diagramms der Figur 3 eine Topftemperatur ($T_{Topf}$) in einem Bereich von 0 °C bis 200 °C aufgetragen ist, zeigt die Ordinate den dabei zu erwartenden Signalhub SH. Während die waagrechte Kurve das Signal $S_{12}$ in einem betrachteten Wellenlängenbereich zwischen 8 $\mu$m und 9 $\mu$m beschreibt, verdeutlichen die fünf geneigten Kurven einen von der Topftemperatur abhängigen Signalhub SH des zweiten betrachteten Signals $S_{34}$ bei jeweils unterschiedlichen Wellenlängenbereichen. Aus diesen Zusammenhängen lassen sich relativ präzise Schlüsse hinsichtlich des betrachteten Materials ziehen, so dass der Temperatursensor in der Realität ein materialabhängiges Signal liefert, das in der nachgeschalteten Auswerteeinheit in ein materialunabhängiges Temperatursignal umgerechnet wird.

Die Beschränkung der erfassten Wellenlängenbereiche auf ca. 5 bis 15 $\mu$m reicht in der Praxis aus, um eine relativ präzise Temperaturregelung zu ermöglichen. Die gleichzeitige Erfassung von drei Wellenlängenbereichen erhöht die Regelgüte gegenüber der Erfassung von nur zwei Bereichen deutlich. Die Erfassung von vier oder mehr Bereichen kann die Güte der Temperaturregelung nochmals deutlich verbessern.

**Bezugszeichenliste**

10    Kochstelle
12    Heizeinrichtung
14    Glaskeramikplatte

16 Regelschaltung
18 Kochgeschirr
20 Gargut
22 Infrarotsensor
24 Außenwand
26 Eingabeeinrichtung

**Patentansprüche**

1. Temperatursensor eines Gargeräts zur berührungslosen Erfassung einer Temperatur eines Kochgeschirrs (18), der wenigstens einen Infrarotsensor (22) aufweist, wobei der wenigstens eine Infrarotsensor (22) ein Mehrkanalpyrometer mit wenigstens zwei voneinander differierenden Empfindlichkeitsbereichen zur Erfassung wenigstens zweier unterschiedlicher, vom Kochgeschirr (18) emittierter Wellenlängenbereiche aufweist, die voneinander beabstandet sind, **dadurch gekennzeichnet, dass** die Wellenlängenbereiche eine Breite von zumindest 5 bis 2 $\mu$m aufweisen, wobei jedem der Wellenlängenbereiche im Wesentlichen die gleichen Wärmeenergiemengen zugeordnet sind.

2. Gargerät mit wenigstens einer Kochstelle (10), die eine elektronische Temperaturregelung aufweist, deren wenigstens eine Regelgröße mittels eines Temperatursensors gemäß Anspruch 1 ermittelbar ist, wobei der Temperatursensor des Gargeräts an der Kochstelle (10) in unmittelbarer Nähe zum Kochgeschirr (18) angeordnet ist.

3. Verfahren zur berührungslosen Erfassung einer Temperatur eines Kochgeschirrs (18), bei dem mittels eines, ein Mehrkanalpyrometer aufweisenden Infrarotsensors (22) wenigstens zwei unterschiedliche vom Kochgeschirr (18) emittierte Wellenlängenbereiche erfasst werden, bei dem die vom Infrarotsensor (22) erfassten Wellenlängen in einem Bereich zwischen ca. 4 $\mu$m bis 20 $\mu$m liegen, wobei die mindestens zwei unterschiedlichen Wellenlängenbereiche eine Breite von zumindest 5 bis 2 $\mu$m aufweisen und voneinander beabstandet sind, wobei jedem der Wellenlängenbereiche im Wesentlichen die gleichen Wärmeenergiemengen zugeordnet sind, und bei welchem Verfahren aus den Signalen für die verschiedenen Wellenlängenbereiche die Temperatur des Kochgeschirrs (18) ermittelt wird.

4. Verfahren nach Anspruch 3, bei dem der Infrarotsensor (22) wenigstens drei unterschiedliche Wellenlängenbereiche erfasst.

5. Verfahren nach Anspruch 3 oder 4, bei dem beim Ermitteln der Temperatur unterschiedliche Bandemissionsgrade ($\varepsilon$) unterschiedlicher Materialien des Kochgeschirrs (18) berücksichtigt werden.

**Claims**

1. Temperature sensor of a cooking appliance for contactlessly acquiring a temperature of a cooking utensil (18), which has at least one infrared sensor (22), wherein the at least one infrared sensor (22) has a multi-channel pyrometer with at least two sensitivity ranges varying from one another for acquiring at least two different wavelength ranges emitted by the cooking utensil (18), which are spaced apart from one another, **characterised in that** the wavelength ranges have a width of at least 5 to 2 $\mu$m, wherein the same thermal energy quantities are essentially assigned to each of the wavelength ranges.

2. Cooking appliance with at least one hob (10), which has an electronic temperature regulator, the at least one variable of which can be determined by means of a temperature sensor according to claim 1, wherein the temperature sensor of the cooking appliance is arranged on the hob (10) in close proximity to the cooking utensil (18).

3. Method for contactlessly acquiring a temperature of a cooking utensil (18), in which at least two different wavelength ranges emitted by the cooking utensil (18) are acquired by means of an infrared sensor (22) having a multi-channel pyrometer, in which the wavelengths acquired by the infrared sensor (22) lie in a range between approx. 4 $\mu$m to 20 $\mu$m, wherein the at least two different wavelength ranges have a width of at least 5 to 2 $\mu$m and are spaced apart from one another, wherein the same thermal energy quantities are essentially assigned to each of the wavelength ranges, and in which method the temperature of the cooking utensil (18) is determined from the signals for the different wavelength ranges.

**4.** Method according to claim 3, in which the infrared sensor (22) acquires at least three different wavelength ranges.

**5.** Method according to claim 3 or 4, in which different materials of the cooking utensil (18) are taken into consideration when determining the temperature of different band emission rates (ε).

### Revendications

**1.** Capteur de température d'un appareil de cuisson pour la détection sans contact d'une température d'un récipient de cuisson (18), lequel présente au moins un capteur à infrarouge (22), l'au moins un capteur à infrarouge (22) présentant un pyromètre à plusieurs canaux comprenant au moins deux zones de sensibilité différentes les unes des autres pour détecter au moins deux zones de longueur d'onde différentes émises par le récipient de cuisson (18), lesquelles sont distancées les unes des autres, **caractérisé en ce que** les zones de longueur d'onde présentent une largeur d'au moins 5 à 2 μm, essentiellement les mêmes quantités d'énergie thermique étant associées à chacune des zones de longueur d'onde.

**2.** Appareil de cuisson comprenant au moins une zone de cuisson (10) qui présente un réglage de température électronique dont au moins une grandeur de réglage peut être détectée au moyen d'un capteur de température selon la revendication 1, le capteur de température de l'appareil de cuisson étant disposé à proximité directe du récipient de cuisson (18) sur la zone de cuisson (10).

**3.** Procédé de détection sans contact d'une température d'un récipient de cuisson (18), dans lequel au moins deux zones de longueur d'onde différentes émises par le récipient de cuisson (18) sont détectées au moyen d'un capteur à infrarouge (22) présentant un pyromètre à plusieurs canaux, dans lequel les longueurs d'onde détectées par le capteur à infrarouge (22) sont situées dans une plage comprise entre environ 4 à 20 μm, les au moins deux zones de longueur d'onde différentes présentant une largeur d'au moins 5 à 2 μm et étant distancées les unes des autres, essentiellement les mêmes quantités d'énergie thermique étant associées à chacune des zones de longueur d'onde, et dans lequel procédé la température du récipient de cuisson (18) est détectée à partir des signaux pour les différentes zones de longueur d'onde.

**4.** Procédé selon la revendication 3, dans lequel le capteur à infrarouge (22) détecte au moins trois zones de longueur d'onde différentes.

**5.** Procédé selon la revendication 3 ou 4, dans lequel différents degrés d'émission de bande (ε) de différentes matières du récipient de cuisson (18) sont pris en considération lors de la détection de la température.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0143282 A
- EP 1302759 A
- EP 0462901 A1